# EUROPÄISCHE PATENTSCHRIFT

(11) **EP 1 298 818 B1**
(45) Veröffentlichungstag und Bekanntmachung des Hinweises auf die Patenterteilung: **02.11.2006**
(21) Anmeldenummer: 02102363.5
(22) Anmeldetag: 16.09.2002
(51) Int. Cl.: H04B 10/135, H04J 14/06

(54) **Verfahren zur Übertragung von mindestens einem ersten und zweiten Datensignal im Polarisationsmultiplex in einem optischen Übertragungssystem**
Method for transmission of at least a first and second polarisation multiplexed signal in an optical transmission system
Procédé de transmission d'au moins un premier et deuxiéme signal multiplexés en polarisation dans un système de transmission optique

(30) Priorität: 28.09.2001 DE 10147871
(43) Veröffentlichungstag der Anmeldung: 02.04.2003
(73) Patentinhaber: SIEMENS AKTIENGESELLSCHAFT, 80333 München (DE)
(72) Erfinder: Glingener, Christoph, Dr., 83620 Feldkirchen-Westerham (DE)

(56) Entgegenhaltungen:
- EP-A- 0 898 391
- WO-A-01/19009
- US-B1- 6 198 559

## Beschreibung

Die Erfindung betrifft ein Verfahren zur Übertragung von mindestens einem ersten und zweiten Datensignal im Polarisationsmultiplex in einem optischen Übertragungssystem, dass eine Sendeanordnung und eine Empfangsanordnung aufweist, die über mindestens einen optischen Faserstreckenabschnitt miteinander verbunden sind.

Bei optischen Übertragungssystemen wird eine Erweiterung der Übertragungskapazität von bereits bestehenden optischen Übertragungssystemen dadurch ermöglich, daß die optischen Datensignale im Polarisationsmultiplex übertragen werden. Zur Übertragung von optischen Datensignalen im Polarisationsmultiplex werden jeweils zwei Trägersignale in mindestens einer Sendeanordnung mit derselben Wellenlänge erzeugt, die mit jeweils mit einem Datensignal moduliert werden. Das erste und zweite modulierte Signal weisen hierbei eine zueinander orthogonale Polarisation auf. Die zueinander orthogonal polarisierten modulierten Signale werden zu einem optischen Polaristionsmultiplexsignal zusammengefasst. Das optische Polaristionsmultiplexsignal wird in die optische Übertragungsfaser eingekoppelt und über die optische Übertragungsstrecke zu einer Empfangseinheit übertragen. Empfangsseitig werden die beiden orthogonal polarisierten modulierten Signale wellenlängenabhängig und polarisationsabhängig aus dem Polaristionsmultiplexsignal rückgewonnen.

Die exakte Trennung der beiden orthogonal polarisierten modulierten Signale aus dem Polaristionsmultiplexsignal stellt hierbei eines der wesentlichen Probleme bei der Übertragung von optischen Datensignalen im Polarisationsmultiplex dar.

Hierzu ist es erforderlich, aus dem empfangenen optischen Polaristionsmultiplexsignal ein Regelkriterium zur Regelung eines empfangsseitig angeordneten Polarisationsstellgliedes zu ermitteln. Mit Hilfe des geregelten Polarisationstransformators und beispielsweise eines nachfolgenden Polarisationssplitters oder eines Polarisationsfilters werden die zueinander orthogonal polarisiert übertragenen modulierten Signale getrennt.

Für die empfangsseitige Regelung der Trennung der beiden orthogonal polarisierten modulierten Signale sind unterschiedliche Regelkriterien bekannt. Aus der Veröffentlichung "Optical polarisation division multiplexing at 4GB/S", von Paul M. Hill et al., IEEE Photonics Technology Letters, Vol. 4, No. 5, Mai 1992 ist die Verwendung von kohärenten Techniken in Kombination mit Pilottönen zur Rekonstruktion bzw. Trennung der polarisationsgemultiplexten optischen Signale bekannt. Ferner ist aus der Veröffentlichung "Fast Automatic Polarization Control System", Heismann and Whalen, IEEE Photonics Technology Letters, Vol. 4, No. 5, Mai 1992 eine Trennung der polarisationsgemultiplexten optischen Datensignale anhand eines aus dem wiedergewonnenen Takt sowie den empfangenen optischen Signalen erzeugten Korrelationssignals bekannt.

Darüber hinaus ist aus der internationalen Anmeldung WO 01/65754 A1 ein Verfahren zur empfangsseitigen Trennung der beiden orthogonal polarisiert übertragenen Signale anhand der Auswertung der Autokorrelationsfunktion eines der übertragenen Signale bekannt. Hierbei wird die Regelung des empfangsseitigen Polarisationsstellgliedes mit Hilfe des über den Autokorrelationsbetrag berechneten Extinktionsverhältnisses des jeweiligen übertragenen Signal ermittelt.

Die Aufgabe der Erfindung ist darin zu sehen, ein neuartiges Verfahren bzw. eine neuartiges optisches Übertragungssystem für die Übertragung von hochbitratigen optischen Signalen im Polarisationsmultiplex anzugeben.

Die Aufgabe wird ausgehend von einem Verfahren gemäß Patentanspruch 1 sowie durch ein optisches Übertragungssystem gemäß Patentanspruch 6 gelöst.

Der wesentliche Vorteil des erfindungsgemäßen Verfahrens ist darin zu sehen, daß zur Übertragung von mindestens einem ersten und zweiten Datensignal im Polarisationsmultiplex in einem optischen Übertragungssystem in einem ersten Schritt sendeseitig durch Modulation eines ersten Trägersignals mit dem ersten Datensignal unter Verwendung einer Non-Return-To-Zero-Codierung ein erstes moduliertes Signal mit einer erster Übertragungsbitrate und durch Modulation eines zweiten Trägersignals mit dem zweiten Datensignal unter Verwendung einer Return-To-Zero-Codierung ein zweites moduliertes Signal mit einer zweiten Übertragungsbitrate erzeugt wird. In einem zweiten Schritt werden das erste und zweite modulierte Signal zueinander orthogonal polarisiert sowie zu einem optischen Multiplexsignal zusammengefasst und übertragen. In einem dritten Schritt wird empfangsseitig das optische Multiplexsignal über ein Polarisationsstellglied an einen Polarisationssplitter geführt, der das optische Multiplexsignal in das erste und zweite modulierte Signal auftrennt. In einem vierten Schritt werden das erste modulierte Signal in ein erstes elektrisches Signal und das zweite modulierte Signal in ein zweites elektrischen Signal umgesetzt und in einem fünften Schritt wird der spektrale Anteil des ersten und/oder des zweiten elektrischen Signals bei der der ersten Übertragungsbitrate entsprechenden Frequenz ermittelt sowie davon mindestens ein Regelsignal zur Regelung des Polarisationsstellgliedes abgeleitet. Durch das erfindungsgemäße Verfahren wird besonders vorteilhaft zur exakten empfangsseitigen Trennung eines ersten und zweiten, im Polarisationsmultiplex übertragenen modulierten Signals zumindest ein empfangsseitig angeordnetes Polarisationsstellglied geregelt. Hierzu wird die Eigenschaft des Modulationsprozesses bei der digitalen Signalübertragung ausgenutzt, daß die für die Modulation verwendete Codierung das Spektrum des modulierten Signals abhängig von der Codierung verändert. Durch die erfindungsgemäße Wahl zweier unterschiedlicher Codierungen, der Non-Return-To-Zero-(NRZ)- und der Return-To-Zero-(RZ)-Codierung, entstehen bei der der ersten Übertragungsbitrate entsprechenden Frequenz unterschiedliche Spektrenverläufe für das erste und zweite modulierte Signal. Das Spektrum des NRZ-codierten modulierten Signals weist ein Minimum bei der der ersten Übertragungsbitrate entsprechenden Frequenz auf, wohingegen das RZ-codierte modulierte Signal nahezu über den gesamten Spektralbereich denselben Wert aufweist. Die Amplitude dieser spektralen Anteile wird erfindungsgemäß zur Bildung zumindest eines Regelsignals für die Steuerung des Polarisationsstellgliedes ausgewertet. Hierbei wird das Polarisationsstellglied beispielsweise mit Hilfe des mindestens einen Regelsignals derart geregelt, daß die Amplitude des ersten elektrischen Signals ein Minimum und die Amplitude des zweiten elektrischen Signals bei der der ersten Übertragungsbitrate entsprechenden Frequenz ein Maximum aufweist. In diesem Fall werden das erste und das zweite modulierte Signal durch den Polarisationssplitter nahezu perfekt getrennt.

Vorteilhaft wird das erste oder zweite modulierte Signal sendeseitig verzögert, wodurch eine effektive Dekorrelation des ersten und zweiten modulierten Signals erreicht wird. Hierdurch kann die Schärfe des Regelkriteriums zusätzlich erhöht werden.

Ein weiterer Vorteil der Erfindung ist darin zu sehen, daß zur Unterscheidung des ersten und zweiten elektrischen Signals sendeseitig dem ersten und/oder dem zweiten Trägersignal mindestens ein Pilottonsignal überlagert wird. Vorteilhaft wird dem ersten und/oder zweiten modulierten Signal ein Pilotton mit einer festgelegten Frequenz überlagert, anhand dessen nach der sendeseitigen Trennung des ersten und zweiten modulierten Signals mit Hilfe des Polarisationssplitters und der Umsetzung in ein erstes und zweites elektrisches Signal eine eindeutige Identifizierung des ersten und zweiten elektrischen Signal als solche möglich wird. Alternativ können zur Unterscheidung des ersten und zweiten elektrischen Signals die erste und das zweite Übertragungsbitrate unterschiedlich hoch gewählt werden. In der alternativen Ausführungsform wird das jeweilige elektrische Signal vorteilhaft anhand seiner individuellen Übertragungsbitrate identifiziert.

Zusätzliche vorteilhafte Ausgestaltungen des erfindungsgemäßen Verfahrens, insbesondere ein optisches Übertragungssystem zur Übertragung von mindestens einem ersten und zweiten Datensignal im Polarisationsmultiplex sind den weiteren Ansprüchen zu entnehmen.

Ausführungsbeispiele des erfindungsgemäßen Verfahrens sowie des erfindungsgemäßen optischen Übertragungssystem sind im folgenden anhand eines Prinzipschaltbildes und mehreren Diagrammen näher erläutert.
- Figur 1: zeigt beispielhaft ein optisches Übertragungssystem zur Übertragung mindestens eines ersten und zweiten Datensignals im Polarisationsmultiplex,
- Figur 2: zeigt beispielhaft das Spektrum des ersten und zweiten modulierten optische Signals, und
- Figur 3: zeigt den Amplitudenverlauf des ermittelten spektralen Anteils bei der der ersten Übertragungsbitrate entsprechenden Frequenz in Abhängigkeit des Polarisationswinkels.

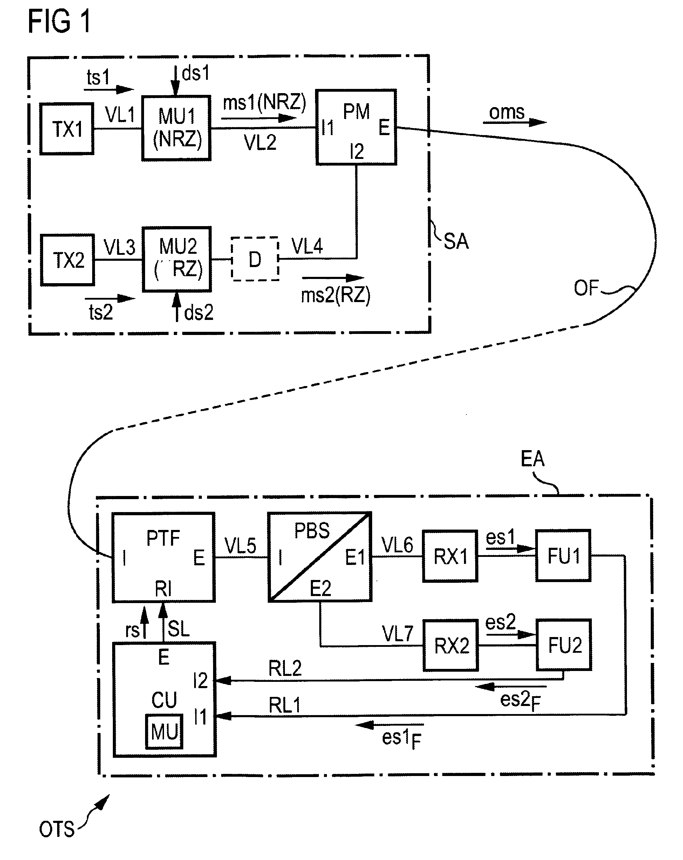

In Figur 1 ist beispielhaft ein optisches Übertragungssystem OTS schematisch dargestellt, das eine Sendeanordnung SA sowie eine über eine optische Übertragungsstrecke OF angeschlossene Empfangsanordnung EA aufweist. In der Sendeanordnung SA sind beispielhaft eine erste und zweite Signalerzeugungseinheit TX1, TX2, eine erste und zweite Modulatoreneinheit MU1, MU2, ein Verzögerungselement D, sowie ein Polarisationsmultiplexer PM vorgesehen. Die Empfangsanordnung EA umfaßt ein Polarisationsstellglied PTF, einen Polarisationssplitter PBS, einen ersten und zweiten opto-elektrischen Wandler RX1, RX2, eine erste und zweite Filtereinheit FU1, FU2 und eine Regeleinheit CU.

Die erste Signalerzeugungseinheit TX1 der Sendeanordnung SA ist über eine erste Verbindungsleitung VL1 an die erste Modulatoreneinheit MU1 angeschlossen, die über eine zweite Verbindungsleitung VL2 mit dem ersten Eingang I1 des Polarisationsmultiplexers PM verbunden ist. Die zweite Signalerzeugungseinheit TX2 ist über eine dritte Verbindungsleitung VL3 mit der zweiten Modulatoreneinheit MU2 verbunden, die über ein Verzögerungselement D durch eine vierte Verbindungsleitung VL4 an den zweiten Eingang E2 des Polarisationsmultiplexers PM angeschlossen ist. Das Verzögerungselement D ist nur optional vorgesehen, was in Figur 1 durch eine strichliert gezeichneten Linie dargestellt ist.

An den Ausgang E des Polarisationsmultiplexers PM ist der Eingang der optischen Übertragungsstrecke OF angeschlossen, deren Ausgang an den Eingang I des Polarisationsstellgliedes PTF der Empfangsanordnung EA geführt ist. Hierbei kann die optische Übertragungsstrecke OF aus mehreren, nicht in Figur 1 dargestellten optischen Übertragungsstreckenabschnitten bestehen (in Figur 1 durch eine strichlierte Linie angedeutet).

Der Ausgang E des Polarisationsstellgliedes PTF ist über eine fünfte Verbindungsleitung VL5 an den Eingang I des Polarisationssplitters PBS angeschlossen, dessen erster Ausgang E1 über eine sechste Verbindungsleitung VL6 an den Eingang des ersten opto-elektrischen Wandlers RX1 und dessen zweiter Ausgang E2 über eine siebte Verbindungsleitung VL7 an den Eingang des zweiten opto-elektrischen Wandlers RX2 geführt ist. Die Ausgänge des ersten bzw. zweiten opto-elektrischen Wandlers RX1, RX2 sind an die Eingänge der ersten bzw. zweiten Filtereinheit FU1, FU2 geführt. Die erste Filtereinheit FU1, sowie die zweite Filtereinheit FU2 sind beispielsweise über eine erste bzw. eine zweite Regelleitung RL1, RL2 mit dem ersten bzw. zweiten Eingang I1, I2 der Regeleinheit CU verbunden, deren Ausgang E über eine Steuerleitung SL an den Regeleingang RI des Polarisationsstellgliedes PTF angeschlossen ist. Außerdem weist die Regeleinheit CU beispielsweise eine Meßeinheit MU auf.

In der ersten Signalerzeugungseinheit TX1 wird ein erstes Trägersignal ts1 erzeugt, das von der ersten Signalerzeugungseinheit TX1 über die erste Verbindungsleitung VL1 an die erste Modulatoreneinheit MU1 geführt wird. Zusätzlich wird an die erste Modulatoreneinheit MU1 ein erstes Datensignal ds1 geführt, mit dem das erste Trägersignal ts1 unter Verwendung einer Non-Return-Zero-Codierung NRZ moduliert wird und hierdurch ein erstes moduliertes Signal ms1(NRZ) erzeugt wird, das über die zweite Verbindungsleitung VL2 an den ersten Eingang I1 des Polarisationsmultiplexers PM gesteuert wird. Das erste modulierte Signal ms1(NRZ) weist eine erste Übertragungsbitrate TR1, beispielsweise 10 Gbit/s, auf.

In der zweiten Signalerzeugungseinheit TX2 wird ein zweites Trägersignal ts2 erzeugt. Das zweite Trägersignal ts2 wird über die dritte Verbindungsleitung VL3 der zweiten Modulatoreneinheit MU2 zugeführt. Der zweiten Modulatoreneinheit MU2 wird ebenfalls ein zweites Datensignal ds2 zur Weiterverarbeitung zugeführt. In der zweiten Modulatoreneinheit MU2 wird das zweite Trägersignal ts2 mit dem zweiten Datensignal ds2 unter Verwendung einer Return-To-Zero-Codierung RZ moduliert und hierdurch ein zweites moduliertes Signal ms2(RZ) erzeugt, das über das Verzögerungselement D, sowie die vierte Verbindungsleitung VL4 an den zweiten Eingang I2 des Polarisationsmultiplexers PM gesteuert wird. Das zweite modulierte Signal ms1 (NRZ) weist eine zweite Übertragungsbitrate TR2 auf, die mit der ersten Übertragungsbitrate TR1 übereinstimmt, d.h. einen Wert von beispielsweise 10 Gbit/s annimmt. Die erste und zweite Übertragungsbitrate TR1, TR2 können auch unterschiedlich gewählt werden, wodurch empfangsseitig die Unterscheidung des mit Hilfe des Polarisationssplitters PBS getrennten ersten und zweiten elektrischen Signals es1,es2 erleichtert wird.

Das am Ausgang der zweiten Modulatoreneinheit MU2 abgegebene zweite modulierte Signal ms2(RZ) wird mit Hilfe des Verzögerungselementes D verzögert, wodurch das erste und zweite modulierte Signal ms1(NRZ), ms2(RZ) sendeseitig dekorreliert werden können.

Bei der Erzeugung des ersten und zweiten modulierten Signals ms1(NRZ), ms2(RZ) wird die Polarisation derart voreingestellt, daß diese zueinander orthogonal polarisiert sind und somit im Polarisationsmultiplex über die optische Übertragungsstrecke OF zur Empfangsanordnung EA übertragen werden können. Zur Orthogonalisierung der Polarisation des ersten und zweiten modulierten Signals ms1 (NRZ), ms2(RZ) können beispielsweise empfangsseitig ein oder mehrere Polarisationsstellglieder vorgesehen sein (nicht in Figur 1 dargestellt). Dies ist jedoch nicht zwingend erforderlich, zumal mit Hilfe von modernen Signalerzeugungseinheiten TX1, TX2 bereits optische Signale mit einer vorgegebenen Polarisation erzeugt werden können.

Das erste und zweite modulierte Signal ms1(NRZ), ms2(RZ) werden mit Hilfe des Polarisationsmultiplexers PM zu einem optischen Multiplexsignal oms zusammengefasst, das am Ausgang E des Polarisationsmultiplexers PM auf die optische Übertragungsstrecke OF gegeben wird. Somit werden das erste und zweite modulierte Signal ms1(NRZ), ms2(RZ) in Form des optischen Multiplexsignals oms im Polarisationsmultiplex über die optische Übertragungsstrecke OF übertragen.

In der Empfangsanordnung EA wird das optische Multiplexsignal oms an den Eingang I des Polarisationsstellgliedes PTF geführt, mit dessen Hilfe die Polarisation des übertragenen ersten und/oder zweiten modulierten Signals ms1(NRZ), ms2(RZ) innerhalb des optischen Multiplexsignals oms geregelt werden kann. Nach der Einstellung der Polarisation des übertragenen ersten und/oder zweiten modulierten Signals ms1(NRZ), ms2(RZ) innerhalb des optischen Multiplexsignales oms wird das optische Multiplexsignal oms über die fünfte Verbindungsleitung VL5 an den Eingang I des Polarisationssplitters PBS geführt, der das optische Multiplexsignal oms in das erste modulierte und das zweite modulierte Signal ms1(NRZ), ms2(RZ) aufspaltet. Die Genauigkeit der Aufspaltung des optischen Multiplexsignal oms in das erste modulierte und das zweite modulierte Signal ms1(NRZ), ms2(RZ) ist abhängig von der Orthogonalität der Polarisation des ersten modulierten und des zweiten modulierten Signals ms1(NRZ), ms2(RZ).

Das erste modulierte Signal ms1(NRZ) wird am ersten Ausgang E1 des Polarisationssplitters PSB abgegeben und über die sechste Verbindungsleitung VL6 an den ersten opto-elektrischen Wandler RX1 geführt. Analog hierzu wird am zweiten Ausgang E2 des Polarisationssplitters PBS das zweite modulierte Signal ms2(RZ) abgegeben und über die siebte Verbindungsleitung VL7 an den zweiten opto-elektrischen Wandler RX2 übertragen.

Das rückgewonnene erste und zweite modulierte Signal ms1(NRZ), ms2(RZ) werden durch den ersten bzw. zweiten opto-elektrischen Wandler RX1, RX2 in ein erstes bzw. zweites elektrisches Signal es1,es2 umgesetzt, die an die erste bzw. zweite Filtereinheit FU1, FU2 geführt werden. Durch die unterschiedlichen Codierungsarten - NRZ-Codierung bei dem ersten modulierten Signal ms1(NRZ) und RZ-Codierung bei dem zweiten modulierten Signal ms2(RZ) - bei der Modulation des ersten und zweiten modulierten Signals ms1(NRZ),ms2(RZ) weisen deren Spektren bei der der ersten Übertragungsbitrate TR1 entsprechenden Frequenz f_{M}, im betrachteten Ausführungsbeispiel f_{M} = 10 GHz, unterschiedliche Ausprägungen auf. Mit Hilfe der ersten und zweiten Filtereinheit FU1,FU2 wird dieser spektrale Anteil des ersten und des zweiten elektrischen Signals es1, es2 bei der der ersten Übertragungsbitrate TR1 entsprechenden Frequenz f_{M} ermittelt und das gefilterte erste und zweite elektrische Signal es1_{F},es2_{F} über die erste und zweite Regelleitung RL1, RL2 an die Regeleinheit CU übertragen. Die erste und zweite Filtereinheit FU1, FU2 sind hierzu beispielsweise als Bandpaßfilter mit einer der der ersten Übertragungsbitrate TR1 entsprechenden Mittenfrequenz f_{M} ( im betrachteten Ausführungsbeispiel beispielsweise f_{M} = 10 GHz) und einer Bandbreite von beispielsweise 1 GHz um die Mittenfrequenz f_{M} ausgestaltet.

In der Regeleinheit CU wird mit Hilfe des Meßeinheit MU die Amplitude des gefilterten ersten und/oder des zweiten elektrischen Signals es1_{F},es2_{F} bestimmt und hieraus mindestens ein Regelsignal rs zur Regelung des Polarisationsstellgliedes PTF abgeleitet, das über die Steuerleitung SL an den Regeleingang RI des Polarisationsstellgliedes PTF geführt wird. Zur Bildung des Regelsignals rs kann beispielsweise die Spannungsamplitude oder die Stromamplitude oder die Leistungsamplitude des gefilterten ersten und/oder des zweiten elektrischen Signals es1_{F},es2_{F} gemessen und ausgewertet werden.

Hierbei wird durch das über das Regelsignals rs gesteuerte Polarisationsstellglied PTF die Polarisation des optischen Multiplexsignales oms derart verändert, dass die durch die Meßeinheit MU der Regeleinheit CU ermittelte Amplitude des gefilterten ersten elektrischen Signals es1_{F} minimal wird und/oder die Amplitude des gefilterten zweiten elektrischen Signals es2_{F} maximal wird. Ist dieses Minimum bzw. Maximum erreicht, so bedeutet dies, dass die Empfangsanordnung EA bestehend aus dem Polarisationsstellgliedes PTF und dem Polarisationssplitters PBS zur Trennung des ersten modulierten Signals ms1(NRZ) und des zweiten modulierten Signals ms2(RZ) optimal eingestellt ist. Durch die in Figur 1 dargestellte Anordnung wird somit eine exakte empfangsseitige Trennung des zueinander orthogonal polarisiert übertragenen ersten und zweiten modulierten Signals ms1(NRZ), ms2(RZ) möglich.

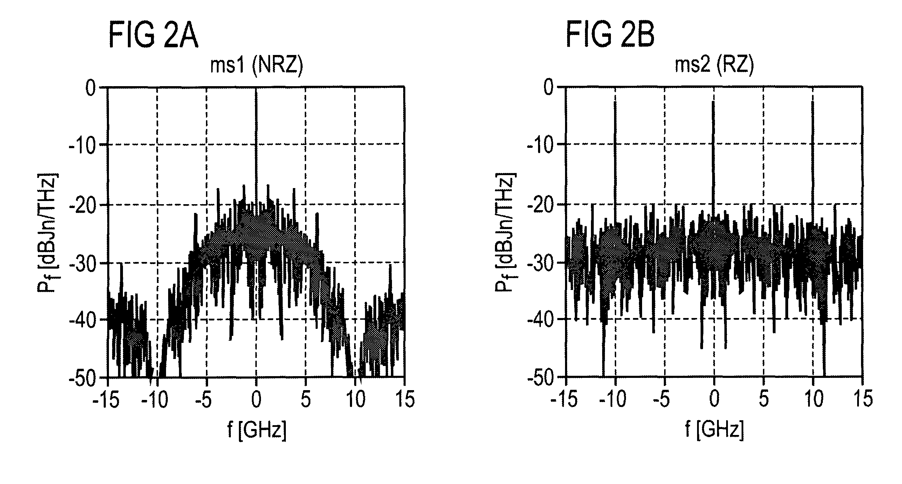

In Figur 2 a) und b) ist beispielhaft in zwei Diagrammen die spektrale Leistungsdichte des ersten und zweiten modulierten Signals ms1(NRZ), ms2(RZ) über der Frequenz f aufgetragen. An der Abszisse der Diagramme ist jeweils die Frequenz f in [GHz] und an der Ordinate der Diagramme jeweils die spektrale Leistungsdichte P in [dBm/THz] angetragen. In Figur 2a) ist die spektrale Leistungsdichte P des ersten NRZ-codierten modulierten Signals ms1(NRZ) und in Figur 2b) die spektrale Leistungsdichte des zweiten, RZ-codierten modulierten Signales ms2(RZ) dargestellt. Aus den in Figur 2a) und b) dargestellten Spektrumsverläufen wird die durch die unterschiedliche Codierung hervorgerufene unterschiedlichen Ausprägung des Spektrums des ersten modulierten Signals ms1(NRZ) im Vergleich zum Spektrum des zweiten modulierten Signals ms2(RZ) bei der der ersten Übertragungsbitrate entsprechenden Frequenz, im dargestellten Ausführungsbeispiel bei f_{M} = 10 GHz, deutlich. Die in Figur 2 dargestellte spektrale Leistungsdichte zeigt deutlich, daß zur optimalen empfangsseitigen Trennung des ersten und zweiten modulierten Signals ms1(NRZ), ms2(RZ) mit Hilfe des geregelten Polarisationsstellgliedes PTF die Polarisation innerhalb des optischen Multiplexsignales oms derartig einzustellen ist, daß beispielsweise das erste gefilterte Signal es1_{F} ein Minimum annimmt und/oder das zweite gefilterte Signal es2_{F} maximal wird.

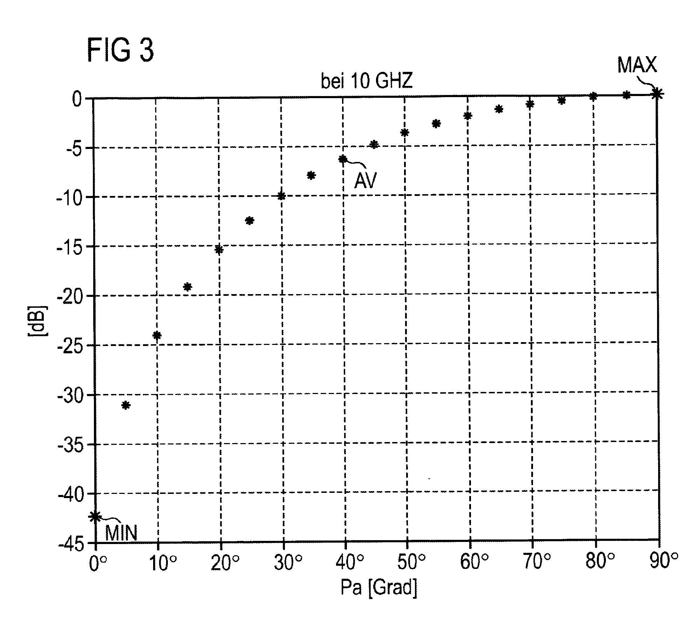

In Figur 3 ist der Amplitudenverlauf AV in logarithmischen Maßstab [dB] des ermittelten spektralen Anteils, beispielsweise der Leistungsamplitude des gefilterten ersten oder zweiten elektrischen Signals es1_{F}, es2_{F}, bei der der ersten Übertragungsbitrate TR1 entsprechenden Frequenz f_{M} in Abhängigkeit des Polarisationswinkels pa in einem Diagramm dargestellt. An der Abszisse des Diagramms ist der Polarisationswinkel pa und an der Ordinate die Amplitude P in [dB] angetragen. Der Amplitudenverlauf AV weist ein Minimum MIN bei einem Polarisationswinkel von pa = 0° auf, d.h. wird das erste modulierte, NRZ-codierte Signals ms1(NRZ) betrachtet, so ist bei einer Polarisationsverschiebung zwischen dem ersten und zweiten elektrischen Signal es1, es2 von 0° die Polarisation perfekt erfaßt. Ist der dargestellte Amplitudenverlauf AV jedoch bezogen auf das zweite modulierte, RZ-codierte Signals ms2(RZ), so ist dessen Polarisation bei einer Polarisationsverschiebung zwischen dem ersten und zweiten elektrischen Signal es1, es2 von 90° und somit bei dem dargestellten Maximum MAX des Amplitudenverlaufes AV perfekt erfaßt. Bei Annahme des Minimums MIN und/oder auch des Maximums MAX sind das innerhalb des optischen Modulationssignals oms übertragene erste und zweite modulierte Signal ms1,ms2 empfangsseitig ideal orthogonal polarisiert und können somit nahezu perfekt mit Hilfe des Polarisationssplitters PBS getrennt werden. Alle anderen Polarisationswinkel pa sind bei der Regelung unerwünscht und führen bei der empfangsseitigen Trennung des ersten und zweiten modulierten Signals ms1,ms2 zu Übersprechen.

Durch die mit Hilfe des in der Sendeanordnung SA optional vorgesehenen Verzögerungselements D durchgeführte Verzögerung beispielsweise des zweiten modulierten Signals ms2 wird der in Figur 3 dargestellte Amplitudenverlauf noch kontrastreicher, wodurch ein noch schärferes Regelsignal rs in der Regeleinheit CU gebildet werden kann. Hierzu können wahlweise das erste oder das zweite modulierte Signal ms1,ms2 mit Hilfe eines Verzögerungselements D verzögert werden.

Zusätzlich können sowohl das erste und das zweite gefilterte elektrische Signal es1_{F},es2_{F} zur Bildung zumindest eines Regelsignals rs ausgewertet werden.

Darüber hinaus ist eine zusätzliche Filterung des ersten und zweiten elektrischen Signals es1, es2 bei weiteren Frequenzen neben der ersten Übertragungsbitrate TR1 entsprechenden Frequenz f_{M} mit Hilfe der ersten und zweiten Filtereinheit FU1, FU2 oder weiterer Filtereinheiten FUx möglich, um hierdurch weitere Informationen über die Polarisation des ersten und zweiten elektrischen Signals es1,es2 zu erhalten. Diese weiteren Informationen können anschließend zur Erhöhung des Kontrastes des mindestens einen Regelsignals rs weiterverarbeitet werden.

Zur empfangsseitigen Unterscheidung des mit Hilfe des Polarisationssplitters PBS getrennten ersten und zweiten elektrischen Signals es1,es2 kann sendeseitig dem ersten und/oder dem zweiten Trägersignal ts1,ts2 oder dem ersten und zweiten modulierten Signal ms1,ms2 mindestens ein Pilottonsignal überlagert werden. Hierbei wird durch die empfangsseitige Identifizierung des Pilottonsignals das erste und zweite elektrische Signal es1,es2 als solches identifiziert und kann anschließend signalspezifisch weiterverarbeitet werden.

## Patentansprüche

1. Verfahren zur Übertragung von mindestens einem ersten und zweiten Datensignal (ds1, ds2) im Polarisationsmultiplex in einem optischen Übertragungssystem (OTS), **dadurch gekenneichnet, daß**
- in einem ersten Schritt sendeseitig durch Modulation eines ersten Trägersignals (ts1) mit dem ersten Datensignal (ds1) unter Verwendung einer Non-Return-To-Zero-Codierung (NRZ) ein erstes moduliertes Signal (ms1) mit einer ersten Übertragungsbitrate TR1 und durch Modulation eines zweiten Trägersignals (ts2) mit dem zweiten Datensignal (ds2) unter Verwendung einer Return-To-Zero-Codierung (RZ) ein zweites moduliertes Signal (ms2) mit einer zweiten Übertragungsbitrate TR2 erzeugt wird,
- in einem zweiten Schritt das erste und zweite modulierte Signal (ms1,ms2) zueinander orthogonal polarisiert sowie zu einem optischen Multiplexsignal (oms) zusammengefasst und übertragen werden,
- in einem dritten Schritt empfangsseitig das optische Multiplexsignal (oms) über ein Polarisationsstellglied (PTF) an einen Polarisationssplitter (PBS) geführt wird, der das optische Multiplexsignal (oms) in das erste und zweite modulierte Signal (ms1, ms2) auftrennt,
- in einem vierten Schritt das erste modulierte Signal (ms1) in ein erstes elektrisches Signal (es1) und das zweite modulierte Signal (ms2) in ein zweites elektrischen Signal (es2) umgesetzt werden,
- in einem fünften Schritt der spektrale Anteil des ersten und/oder des zweiten elektrischen Signals (es1,es2) bei der der ersten Übertragungsbitrate TR1 entsprechenden Frequenz f_{M} ermittelt wird und davon mindestens ein Regelsignal (rs) zur Regelung des Polarisationsstellgliedes (PTF) abgeleitet wird.

2. Verfahren nach Anspruch 1, bei dem
die Amplitude P des ersten und des zweiten elektrischen Signals (es1, es2) bei der der ersten Übertragungsbitrate TR1 entsprechenden Frequenz f_{M} ermittelt wird und die Amplitude des ersten elektrischen Signals (es1) auf ein Minimum (MIN) und/oder die Amplitude des zweiten elektrischen Signals (es2) auf ein Maximum (MAX) geregelt wird.

3. Verfahren nach Anspruch 1 oder 2, bei dem
das erste oder zweite modulierte Signal (ms1, ms2) sendeseitig zur Dekorrelation verzögert wird.

4. Verfahren nach einem der Ansprüche 1 bis 3, bei dem
zur Unterscheidung des ersten und zweiten elektrischen Signals (es1, es2) sendeseitig dem ersten und/oder dem zweiten Trägersignal (ts1, ts2) oder modulierten Signal (ms1, ms2) mindestens ein Pilottonsignal überlagert wird.

5. Verfahren nach einem der Ansprüche 1 bis 4, bei dem
zur Unterscheidung des ersten und zweiten elektrischen Signals die erste und zweite Übertragungsbitrate TR1, TR2 unterschiedlich hoch gewählt werden.

6. Optisches Übertragungssystem (OTS) zur Übertragung von mindestens einem ersten und zweiten Datensignal (ds1,ds2) im Polarisationsmultiplex mit einer Sendeanordnung (SA) und einer Empfangsanordnung (EA), die über mindestens einen optischen Faserstreckenabschnitt (OF) verbunden sind, **dadurch gekennzeichnet, daß**
- die Sendeeanordnung (SA) mindestens eine Signalerzeugungseinheit (TX1, TX2) zur Erzeugung eines ersten und zweiten Trägersignals (ts1, ts2) aufweist, der mindestens eine Modulatoreneinheit (MU1, MU2) zur Erzeugung eines ersten, eine erste Übertragungsbitrate TR1 aufweisenden modulierten Signals (ms1) durch Modulation mit Non-Return-To-Zero-Codierung des ersten Trägersignals (ts1) mit dem ersten Datensignal (ds1) und zur Erzeugung eines zweiten, eine zweite Übertragungsbitrate TR2 aufweisenden modulierten Signals (ms2) durch Modulation mit Return-To-Zero-Codierung des zweiten Trägersignals (ts2) mit dem zweiten Datensignal (ds2) nachgeschaltet ist, wobei das erste und zweite modulierte Signal (ms1,ms2) zueinander orthogonal polarisiert sind,
- in der Sendeanordnung (SA) der mindestens einen Modulatoreneinheit (MU1,MU2) ein Polarisationsmultiplexer (PM) zum Zusammenfassen des ersten und zweiten modulierten, zueinander orthogonal polarisierten Signals (ms1,ms2) zu einem optischen Multiplexsignal (oms) nachgeschaltet ist,
- in der Empfangsanordnung (EA) mindestens ein Polarisationsstellglied (OTF) zur Einstellung der Orthogonalität der Polarisation des ersten und zweiten modulierten Signals (ms1,ms2) und ein diesem nachgeschalteter, einen ersten und zweiten Ausgang (E1,E2) aufweisender Polarisationssplitter (PBS) zur Aufspaltung des optischen Multiplexsignals (oms) in das erste und zweite modulierte Signal (ms1,ms2) vorgesehen sind, an dessen ersten Ausgang (E1) ein erster opto-elektrischer Wandler (RX1) zur Umsetzung des ersten modulierten Signals (ms1) in ein erstes elektrisches Signal (es1) und an dessen zweiten Ausgang (E2) ein zweiter opto-elektrischer Wandler (RX2) zur Umsetzung des zweiten modulierten Signals (ms2) in ein zweites elektrisches Signal (es2) angeschlossen sind und
- an den ersten und/oder den zweiten opto-elektrischen Wandler (RX1, RX2) eine Filtereinheit (FU1, FU2) zur Ermittlung des spektralen Anteils des ersten und/oder des zweiten elektrischen Signals (es1, es2) bei der der ersten Übertragungsbitrate TR1 entsprechenden Frequenz vorgesehen ist, an die eine Regeleinheit (CU) zur Bildung mindestens eines Regelsignals (rs) aus dem gefilterten spektralen Anteil (es1_{F},es2_{F}) zur Regelung des Polarisationsstellgliedes (PTF) angeschlossen ist.

7. Optisches Übertragungssystem nach Anspruch 6, bei dem zur Bildung des mindestens einen Regelsignals (rs) in der Regeleinheit (CU) eine Meßeinheit (MU)zur Ermittlung der Amplitude des gefilterten spektralen Anteils des ersten und/oder des zweiten elektrischen Signals (es1_{F}, es2_{F}) vorgesehen ist.

8. Optisches Übertragungssystem nach Anspruch 6 oder 7, bei dem
die Filtereinheit (FU1, FU2) als Bandpaßfilter mit einer der ersten Übertragungsbitrate TR1 des ersten Datensignals (ds1) entsprechenden Mittenfrequenz f_{M} ausgestaltet ist.

9. Optisches Übertragungssystem nach einem der Ansprüche 7 bis 8, bei dem
weitere Filtereinheiten (FU1, FU2) an den ersten und/oder den zweiten opto-elektrischen Wandler (RX1, RX2) zur Ermittlung von weiteren spektralen Anteilen des ersten und/oder des zweiten elektrischen Signals (es1,es2) bei unterschiedlichen Frequenzen (f) vorgesehen sind, die zusätzlich zur Bildung des mindestens eines Regelsignals (rs) in der Regeleinheit (CU) ausgewertet werden.

## Claims

1. Method for transmitting at least one first and one second data signal (ds1, ds2) in polarization division multiplex in an optical transmission system (OTS), **characterized in that**
- in a first step, a first modulated signal (ms1) with a first transmission bit rate TR1 is generated at the transmitting end by modulating a first carrier signal (ts1) with the first data signal (ds1), using a nonreturn to zero coding (NRZ), and a second modulated signal (ms2) with a second transmission bit rate TR2 is generated by modulating a second carrier signal (ts2) with the second data signal (ds2), using a return to zero coding (RZ),
- in a second step, the first and second modulated signal (ms1, ms2) are mutually orthogonally polarized and combined to form an optical multiplex signal (oms) and are transmitted,
- in a third step, the optical multiplex signal (oms) is conducted via a polarization control element (PTF) at the receiving end to a polarization splitter (PBS) which splits the optical multiplex signal (oms) into the first and second modulated signal (ms1, ms2),
- in a fourth step, the first modulated signal (ms1) is converted into a first electrical signal (es1) and the second modulated signal (ms2) is converted into a second electrical signal (es2),
- in a fifth step, the spectral component of the first and/or the second electrical signal (es1, es2) is determined at the frequency f_{M} corresponding to the first transmission bit rate TR1 and from this, at least one control signal (rs) is derived for controlling the polarization control element (PTF).

2. Method according to Claim 1, in which the amplitude P of the first and the second electrical signal (es1, es2) is determined at the frequency f_{M} corresponding to the first transmission bit rate TR1 and the amplitude of the first electrical signal (es1) is controlled to a minimum (MIN) and/or the amplitude of the second electrical signal (es2) is controlled to a maximum (MAX).

3. Method according to Claim 1 or 2, in which the first or second modulated signal (ms1, ms2) is delayed at the transmitting end for the purpose of decorrelation.

4. Method according to one of Claims 1 to 3, in which, in order to distinguish between the first and second electrical signal (es1, es2), at least one pilot tone signal is superimposed on the first and/or the second carrier signal (ts1, ts2) or modulated signal (ms1, ms2) at the transmitting end.

5. Method according to one of Claims 1 to 4, in which, in order to distinguish between the first and second electrical signal, the first and second transmission bit rate TR1, TR2 are selected to be different rates.

6. Optical transmission system (OTS) for transmitting at least one first and one second data signal (ds1, ds2) in polarization division multiplex, comprising a transmitting arrangement (SA) and a receiving arrangement (EA) which are connected via at least one optical fiber link section (OF), **characterized in that**
- the transmitting arrangement (SA) exhibits at least one signal generating unit (TX1, TX2) for generating a first and second carrier signal (ts1, ts2), which is followed by at least one modulator unit (MU1, MU2) for generating a first modulated signal (ms1) exhibiting a first transmission bit rate TR1 by modulation with nonreturn to zero coding of the first carrier signal (ts1) with the first data signal (ds1) and for generating a second modulated signal (ms2), exhibiting a second transmission bit rate TR2, by modulation with return to zero coding of the second carrier signal (ts2) with the second data signal (ds2), the first and second modulated signal (ms1, ms2) being polarized orthogonally with respect to one another,
- in the transmitting arrangement (SA), the at least one modulator unit (MU1, MU2) is followed by a polarization multiplexer (PM) for combining the first and second modulated, mutually orthogonally polarized signal (ms1, ms2) to form an optical multiplex signal (oms),
- in the receiving arrangement (EA), at least one polarization control element (OTF) for adjusting the orthogonality of the polarization of the first and second modulated signal (ms1, ms2), followed by a polarization splitter (PBS), exhibiting a first and second output (E1, E2), for splitting the optical multiplex signal (oms) into the first and second modulated signal (ms1, ms2), are provided, at the first output (E1) of which a first optoelectrical transducer (RX1) for converting the first modulated signal (ms1) into a first electrical signal (es1) is connected and at the second output (E2) of which a second optoelectrical transducer (RX2) for converting the second modulated signal (ms2) into a second electrical signal (es2) is connected and
- at the first and/or the second optoelectrical transducer (RX1, RX2), a filter unit (FU1, FU2) is provided for determining the spectral component of the first and/or the second electrical signal (es1, es2) at the frequency corresponding to the first transmission bit rate TR1, which filter unit is connected to a control unit (CU) for forming at least one control signal (rs) from the filtered spectral component (es1_{F}, es2_{F}) for controlling the polarization control element (PTF).

7. Optical transmission system according to Claim 6, in which, for forming the at least one control signal (rs), a measuring unit (MU) for determining the amplitude of the filtered spectral component of the first and/or the second electrical signal (es1_{F}, es2_{F}) is provided in the control unit (CU).

8. Optical transmission system according to Claim 6 or 7, in which the filter unit (FU1, FU2) is designed as band-pass filter with a center frequency f_{M} corresponding to the first transmission bit rate TR1 of the first data signal (ds1).

9. Optical transmission system according to one of Claims 7 to 8, in which other filter units (FU1, FU2) are provided at the first and/or the second optoelectrical transducer (RX1, RX2) for determining further spectral components of the first and/or the second electrical signal (es1, es2) at different frequencies f which are additionally evaluated for forming the at least one control signal (rs) in the control unit (CU).

## Revendications

1. Procédé de transmission d'au moins un premier et un deuxième signal de données (ds1, ds2) par multiplexage en polarisation dans un système de transmission optique (OTS), **caractérisé en ce que**
- dans une première étape, côté émetteur, un premier signal modulé (ms1), avec un premier débit binaire de transmission TR1, est généré par modulation d'un premier signal porteur (ts1) avec le premier signal de données (ds1) moyennant l'utilisation d'un codage de non retour à zéro (NRZ) et un deuxième signal modulé (ms2), avec un deuxième débit binaire de transmission TR2, est généré par modulation d'un deuxième signal porteur (ts2) avec le deuxième signal de données (ds2) moyennant l'utilisation d'un codage de retour à zéro (RZ);
- dans une deuxième étape, les premier et deuxième signaux modulés (ms1, ms2) sont polarisés orthogonalement l'un par rapport à l'autre, regroupés pour former un signal optique multiplexé (oms), et transmis;
- dans une troisième étape, côté récepteur, le signal optique multiplexé (oms) est amené par un organe de réglage de polarisation (PTF) à un séparateur de polarisation (PBS) qui sépare le signal optique multiplexé (oms) en les premier et deuxième signaux modulés (ms1, ms2);
- dans une quatrième étape, le premier signal modulé (ms1) est converti en un premier signal électrique (es1) et le deuxième signal modulé (ms2), en un deuxième signal électrique (es2);
- dans une cinquième étape, on détermine la fraction spectrale du premier et/ou du deuxième signal électrique (es1, es2) à la fréquence f_{M} correspondant au premier débit binaire de transmission TR1 et on en dérive au moins un signal de réglage (rs) pour régler l'organe de réglage de polarisation (PTF).

2. Procédé selon la revendication 1, dans lequel on détermine l'amplitude des premier et deuxième signaux électriques (es1, es2) à la fréquence f_{M} correspondant au premier débit binaire de transmission TR1 et on règle l'amplitude du premier signal électrique (es1) sur un minimum (MIN) et/ou l'amplitude du deuxième signal électrique (es2) sur un maximum (MAX).

3. Procédé selon la revendication 1 ou 2, dans lequel le premier ou le deuxième signal modulé (ms1, ms2) est retardé, côté émetteur, en vue d'une décorrélation.

4. Procédé selon l'une des revendications 1 à 3, dans lequel, pour distinguer entre les premier et deuxième signaux électriques (es1, es2), côté émetteur, au moins un signal de tonalité pilote est superposé au premier et/ou au deuxième signal porteur (ts1, ts2) ou signal modulé (ms1, ms2).

5. Procédé selon l'une des revendications 1 à 4, dans lequel, pour distinguer entre les premier et deuxième signaux électriques, on choisit les premier et deuxième débits binaires de transmission TR1, TR2 de hauteur différente.

6. Système de transmission optique (OTS) pour la transmission d'au moins un premier et un deuxième signal de données (ds1, ds2) par multiplexage en polarisation, comportant un ensemble émetteur (SA) et un ensemble récepteur (EA) qui sont reliés par au moins un tronçon de fibre optique (OF), **caractérisé en ce que**
- l'ensemble émetteur SA comporte au moins une unité de génération de signaux (TX1, TX2) pour générer un premier et un deuxième signal porteur (ts1, ts2), en aval de laquelle est montée au moins une unité de modulation (MU1, MU2) pour générer un premier signal modulé (ms1), présentant un premier débit binaire de transmission TR1, par modulation avec codage de non retour à zéro du premier signal porteur (ts1) avec le premier signal de données (ds1) et pour générer un deuxième signal modulé (ms2), présentant un deuxième débit binaire de transmission TR2, par modulation avec codage de retour à zéro du deuxième signal porteur (ts2) avec le deuxième signal de données (ds2), les premier et deuxième signaux modulés (ms1, ms2) étant polarisés orthogonalement l'un par rapport à l'autre;
- dans l'ensemble émetteur (SA), un multiplexeur en polarisation (PM) pour regrouper les premier et deuxième signaux modulés, polarisés orthogonalement l'un par rapport à l'autre (ms1, ms2) pour former un signal optique multiplexé (oms) est monté en aval de l'au moins une unité de modulation (MU1, MU2),
- dans l'ensemble récepteur (EA) sont prévus au moins un organe de réglage de polarisation (OTF) pour le réglage de l'orthogonalité de la polarisation des premier et deuxième signaux modulés (ms1, ms2) et un séparateur de polarisation (PBS), monté en aval de celui-ci et comportant une première et une deuxième sortie (E1, E2), pour séparer le signal optique multiplexé (oms) en les premier et deuxième signaux modulés (ms1, ms2), à la première sortie (E1) duquel est connecté un premier convertisseur opto-électrique (RX1) pour convertir le premier signal modulé (ms1) en un premier signal électrique (es1) et à la deuxième sortie (E2) duquel est connecté un deuxième convertisseur opto-électrique (RX2) pour convertir le deuxième signal modulé (ms2) en un deuxième signal électrique (es2) et
- une unité de filtrage (FU1, FU2) est prévue au niveau du premier et/ou du deuxième convertisseur opto-électrique (RX1, RX2) pour déterminer la fraction spectrale du premier et/ou du deuxième signal électrique (es1, es2) à la fréquence correspondant au premier débit binaire de transmission TR1, unité à laquelle est connectée une unité de réglage (CU) pour former au moins un signal de réglage (rs) à partir de la fraction spectrale filtrée (es1_{F}, es2_{F}) pour régler l'organe de réglage de polarisation (PTF).

7. Système de transmission optique selon la revendication 6, dans lequel est prévue, pour former l'au moins un signal de réglage (rs), dans l'unité de réglage (CU), une unité de mesure (MU) pour déterminer l'amplitude de la fraction spectrale filtrée du premier et/ou du deuxième signal électrique (es1_{F}, es2_{F}).

8. Système de transmission optique selon la revendication 6 ou 7, dans lequel l'unité de filtrage (FU1, FU2) est réalisée en tant que filtre passe-bande avec une fréquence centrale f_{M} correspondant au premier débit binaire de transmission TR1 du premier signal de données (ds1).

9. Système de transmission optique selon l'une des revendications 7 à 8, dans lequel sont prévues d'autres unités de filtrage (FU1, FU2) au niveau du premier et/ou du deuxième convertisseur opto-électrique (RX1, RX2) pour déterminer d'autres fractions spectrales du premier et/ou du deuxième signal électrique (es1, es2) à différentes fréquences f, lesquelles sont additionnellement évaluées pour former l'au moins un signal de réglage (rs) dans l'unité de réglage (CU).
